# EUROPÄISCHE PATENTANMELDUNG

(11) **EP 1 619 355 A1**
(43) Veröffentlichungstag der Anmeldung: **25.01.2006**
(21) Anmeldenummer: 04017145.6
(22) Anmeldetag: 20.07.2004
(51) Int. Cl.: F01D 11/04, F01D 25/22, F01D 25/16

(54) **Lager und Dichtungsanordnung in einer Dampfturbine**

(71) Anmelder: SIEMENS AKTIENGESELLSCHAFT, 80333 München (DE)
(72) Erfinder: Krause, Uwe, 45359 Essen (DE); Moser, Michael, 40474 Düsseldorf (DE); Stüer, Heinrich, Dr., 45721 Haltern (DE); Truckenmüller, Frank, 45470 Mülheim (DE)

(57) **Zusammenfassung**

Dampfturbine mit einem um eine Längsrichtung (15) drehbar gelagerten Rotor (6) und zumindest einer um den Rotor (6) angeordneten Turbinenkomponente (14), die eine mit einem Innendruck (p₁) beaufschlagten Innenraum (18) von einem mit einem Außendruck (p₂) beaufschlagten Außenraum (19) abgrenzt, wobei der Innendruck (p₁) von dem Außendruck (p₂) abweicht, und die Dampfturbine mit zumindest einer mit Wasser betriebenen Wellenlagerkomponente (18) zum Lagern des Rotors (6) ausgebildet ist, wobei die Turbinenkomponente (4) und die Wellenlagerkomponente (8) in Längsrichtung (5) gegeneinander dichtend direkt nacheinander angeordnet sind.

## Beschreibung

Die Erfindung betrifft eine Dampfturbine mit einem um eine Längsrichtung drehbar gelagerten Rotor und zumindest einer um den Rotor angeordneten Turbinenkomponente, die einen mit einem Innendruck (p₁) beaufschlagten Innenraum von einem mit einem Außendruck (p₂) beaufschlagten Außenraum abgrenzt, wobei der Innendruck (p₁) von dem Außendruck (p₂) abweicht, und die Dampfturbine mit zumindest einer mit Wasser betriebenen Wellenlagerkomponente zum Lagern des Rotors ausgebildet ist.

Gemäß dem Stand der Technik gibt es zur Dichtung zwischen dem Rotor und einer Turbinenkomponente zwei Ausführungsformen von Dichtungen bei einer Dampfturbine. Die eine Ausführungsform wird eingesetzt, wenn der Druck im Innenraum der Dampfturbine größer ist als der Umgebungsdruck um die Dampfturbine herum. Die zweite Ausführungsform wird eingesetzt, wenn der Druck im Innenraum der Dampfturbine kleiner ist als der Umgebungsdruck um die Dampfturbine herum. In beiden Ausführungsformen wird der Rotor über separate Lageranordnungen gestützt. Da es sich bei dem Arbeitsmedium um ein Gas handelt und darüber hinaus etwaige Relativbewegungen zwischen dem Rotor und dem Gehäuse berücksichtigt werden müssen, kommen berührungsfreie Wellendichtungen zum Einsatz. Diese Dichtungsart ist allerdings zwangsläufig mit Leckageströmen verbunden. Das bedeutet, dass ein gewisser Teil des Arbeitsmediums zwangsläufig die Dichtung in Richtung des Druckgefälles passiert.

Um ein unkontrolliertes Entweichen des Arbeitsmediums aus der Dampfturbine zu verhindern, wird üblicherweise der im Innenraum herrschende Überdruck in der Wellendichtung stufenweise abgebaut. Dazu werden mehrere Bohrungen ausgebildet. In den Bohrungen wird der Druck in der Leckageströmung vermindert.

Der durch die Bohrung entweichende Dampf kann dem Dampfkreislauf wieder zugeführt werden.

Um zu verhindern, dass mit der letzten Bohrung Arbeitsmedium an die Umgebung austritt, wird in der letzten Bohrung über ein Hilfssystem ein Druck unterhalb des Umgebungsdrucks bereitgestellt. D.h., dass in dieser Bohrung die Umgebungsluft hineingesaugt wird. Ebenso wird das Arbeitsmedium in diese Bohrung hineingesaugt. Das Arbeitsmedium kann somit nicht in die Umgebung gelangen. Dadurch entsteht eine Leckageströmung bestehend aus einem Gemisch aus Arbeitsmedium (aus dem Innenraum der Dampfturbine) und der Umgebungsluft. Um den Anteil des Arbeitsmediums wieder in den Kreislauf zurückführen zu können, muss das Gemisch nicht nur kondensiert und getrennt, sondern auch aufwändig von eventuellen Verunreinigungen durch die Umgebungsluft gereinigt werden.

Für den Fall, dass der Druck im Innenraum der Dampfturbine kleiner ist als der Umgebungsdruck, werden gemäß dem Stand der Technik anders ausgeführte Wellendichtungen eingesetzt. Um nicht gezwungen zu sein, mit dem Hilfssystem einen Druck bereitzustellen, der unter Umständen unter dem im Inneren der Dampfturbine herrschenden Druck liegen kann, wird innerhalb der Dichtungsgruppen mit dem Arbeitsmedium ein Druckniveau oberhalb des Umgebungsdrucks bereitgestellt. Dies wird zur Umgebung hin, wie oben beschrieben, über das Druckniveau des Hilfssystems abgedichtet, die Leckage des Arbeitsmediums wird nach außen hin vom Hilfssystem abgefangen. Gleichzeitig wird ein Druckgefälle für die Umgebungsluft in die Dampfturbine hinein erzeugt. Zusätzlich besteht nun aber auch ein Druckgefälle vom bereitgestellten Arbeitsmedium in die auf niedrigerem Druckniveau arbeitende Dampfturbine hinein. Auch dieses Druckgefälle wird abgedichtet, jedoch ist der hier auftretende Leckagestrom der Dampfturbine nicht schädlich, da es sich um ein reines, nicht verunreinigtes Arbeitsmedium handelt.

In der EP 1 034 357 B1 wird ein Verfahren zum Betrieb einer Dampfturbinenanlage beschrieben, das statt Öl Wasser als Kühl- und Schmiermittel einsetzt. Hierbei wird ein separates Wellenlager der Dampfturbinenanlage derart ausgebildet, dass Wasser als Kühl- und Schmiermittel eingesetzt werden kann.

Im Übrigen verfügt eine Dampfturbinenanlage in der Regel über einen Ölkreislauf, der im Wesentlichen drei Aufgaben erfüllt: zum ersten dient das Öl als Schmier- und Kühlmittel für die Lager von Dampfturbine und Generator. Zum zweiten werden die Regelventile der Dampfturbine über ölhydraulische Stellzylinder betrieben. Zum dritten dient das Öl der Kühlung und Schmierung des Betriebes. Die jeweils anfallende Verlustwärme wird an den Ölkreislauf abgegeben und an einen Öl/Wasserwärmeaustauscher abgeführt. Insgesamt sind zur Erfüllung dieser drei Aufgaben relativ große Ölmengen erforderlich. Diese Ölmengen können zu mehreren Problemen führen. Umweltbeeinträchtigungen durch austretendes Öl sind im Falle von Leckagen im Ölkreislauf zu befürchten. Austretendes Öl stellt eine ernst zu nehmende Brandgefahr dar.

Aufgabe der Erfindung ist es, eine Dampfturbine mit verbesserter Dicht- und Lagerwirkung anzugeben.

Die Aufgabe wird gelöst durch eine Dampfturbine mit einem um eine Längsrichtung drehbar gelagerten Rotor und zumindest einer um den Rotor angeordneten Turbinenkomponente, die einen mit einem Innendruck (p₁) beaufschlagten Innenraum von einem mit einem Außendruck (p₂) beaufschlagten Außenraum abgrenzt, wobei der Innendruck (p₁) von dem Außendruck (p₂) abweicht, und die Dampfturbine mit zumindest einer mit Wasser betriebenen Wellenlagerkomponente zum Lagern des Rotors ausgebildet ist, wobei die Turbinenkomponente und die Wellenlagerkomponente in Längsrichtung gegeneinander dichtend direkt nacheinander angeordnet sind.

Der Vorteil ist unter anderem darin zu sehen, dass ein Hilfssystem zur Erzeugung eines Unterdruckes zu Dichtungszwecken gegenüber der Umgebung entfallen kann. Ebenso kann auf eine aufwändige Kondensation, Trennung und Reinigung des Gemisches aus Arbeits- und Umgebungsmedium entfallen. Sofern das Wellenlager selbst unter Überdruck arbeitet, können die letzten Druckstufen der Dichtung eines unter Überdruck arbeitenden Gehäuses entfallen. Dies reduziert den axialen Bauraum. Ein weiterer Vorteil ist, dass der Leckagestrom, der bis zum Druckniveau des Lagers anfällt, dem Kreislauf wiederzugeführt werden kann, was zu einer Verbesserung des Wirkungsgrades führt. Durch die Reduzierung der axialen Baulänge gelangt man zu einer besseren rotordynamischen Stabilität und zu reduzierten Kosten durch geringere Fundament- und Gebäudelängen.

Ein weiterer Vorteil ist, dass das Wasserlager problemlos in den Innenraum der Dampfturbine eingebaut werden kann. Da das Schmiermedium des Lagers dem Arbeitsmedium in der Dampfturbine entspricht, kann durch das Lager keine Verunreinigung des hochreinen Arbeitsmediums entstehen.

Die Erfindung geht von der Überlegung aus, dass eine separate Anordnung von Dichtungskomponente und Wellenlagerkomponente einen Verlust des Wirkungsgrades durch Leckageströmung in der Dichtungskomponente zur Folge hat. Ebenso geht die Erfindung von dem Gedanken aus, dass bei einer separaten Anordnung der Turbinenkomponente und Wellenlagerkomponente bei einem im Innenraum der Dampfturbine herrschenden Druck von p₁, der kleiner sein kann als der Außendruck p₂, ein Eindringen von Atmosphärenluft in die Dampfturbine nicht verhindert werden kann. Dampfturbinen können in einem Maschinenhaus oder unter freiem Himmel aufgebaut sein. Durch den erfindungsgemäßen Einsatz der Turbinenkomponente und der Wellenlagerkomponente als eine Einheit, in dem beide in Längsrichtung gegeneinander dichtend direkt nacheinander angeordnet werden, führt zu dem Vorteil, dass Leckageströme minimiert werden, was zu einer Erhöhung des Wirkungsgrades führt. Eine Verunreinigung ist weitestgehend verhindert, da ein mit Wasser betriebenes Wellenlager den gleichen Stoff umfasst wie das Arbeitsmedium in der Dampfturbine.

In einer vorteilhaften Weiterbildung ist die Wellenlagerkomponente mit der Turbinenkomponente integriert.

Dadurch besteht die Möglichkeit Wellenlagerkomponente und Turbinenkomponente materialeinheitlich auszubilden, um dadurch axiale Baulänge zu minimieren. Darüber hinaus erhöht solch eine Anordnung die Festigkeit der Dampfturbine.

In einer weiteren vorteilhaften Weiterbildung ist die Wellenlagerkomponente gedichtet an die Turbinenkomponente angeflanscht.

Dadurch wird die Möglichkeit geschaffen, im Falle einer Störung oder eines Defektes der Wellenlagerkomponente, diese möglichst einfach von der Turbinenkomponente zu lösen. Eine Reparatur kann dann an einem anderen Ort stattfinden.

In einer vorteilhaften Weiterbildung ist in der Turbinenkomponente eine Bohrung zum Vermindern eines Anzapfdruckes vorgesehen.

Die einzelnen Turbinengehäuse einer Dampfturbinenanlage stehen entweder unter Überdruck gegenüber dem Umgebungsdruck um die Dampfturbine herum oder unter Unterdruck, wenn der Druck in der Dampfturbine geringer ist als der Umgebungsdruck um die Dampfturbine herum. Die Druckunterschiede können hierbei sehr groß sein. Eine Strömung zwischen der Turbinenkomponente und dem Rotor ist in Folge des hohen Druckunterschiedes kaum zu vermeiden. Durch eine Bohrung in der Turbinenkomponente wird an der Stelle der Bohrung der dort herrschende Druck vermindert. Dies führt zu einem geringeren Druckgradienten zwischen dem Innenraum der Turbinenkomponente und dem Außenraum.

Ist der Innendruck p₁ größer als der Außendruck p₂, so wird in einer vorteilhaften Weiterbildung die Bohrung derart ausgebildet, dass der Anzapfdruck im Wesentlichen gleich groß ist wie der Außendruck p₂. In Folge dessen herrscht kein Druckgradient, was zu keiner erzwungenen Strömung führt.

Ist der Innendruck p₁ kleiner als der Außendruck p₂, so wird in einer vorteilhaften Weiterbildung die Bohrung derart ausgebildet, dass der Anzapfdruck im Wesentlichen kleiner ist als der Außendruck p₂. Der Druckgradient zwischen dem Außenraum und der Turbinenkomponente am Ort der Bohrung wird verringert. Dies führt zu einer Verminderung der Strömung in die Dampfturbine hinein.

In einer weiteren vorteilhaften Weiterbildung, ist in der Turbinenkomponente eine zweite Bohrung zum Vermindern eines Anzapfdruckes vorgesehen. Der zweite Anzapfdruck ist im Wesentlichen gleich groß wie der Außendruck p₂.

Dadurch wird der Druck in der Turbinenkomponente an der zweiten Bohrung dem Außendruck p₂ angeglichen. Somit herrscht zwischen dem Außenraum und am Ort der zweiten Anzapfbohrung kein Druckgradient. Somit ist eine Strömung weitestgehend verhindert.

Durch die Verminderung des Anzapfdruckes entsteht eine Strömung von dem Rotor weg in die Turbinenkomponente hinein. Da es sich bei dieser Strömung um Wasserdampf handelt, kann dieser Wasserdampf der Dampfturbinenanlage wieder zugeführt werden.

Anhand der nachfolgenden Beschreibung werden Ausführungsbeispiele der Erfindung unter Bezugnahme auf die Zeichnungen noch näher erläutert.

Dabei zeigen:
- Fig. 1: eine Dampfturbinenanlage;
- Fig. 2: einen Schnitt durch eine Wellenlager- und Dichtungskomponente;
- Fig. 3: einen weiteren Schnitt durch eine Wellenlager- und Dichtungskomponente
- Figur 4: einen Schnitt durch eine weiter gebildete Wellenlager- und Dichtungskomponente;

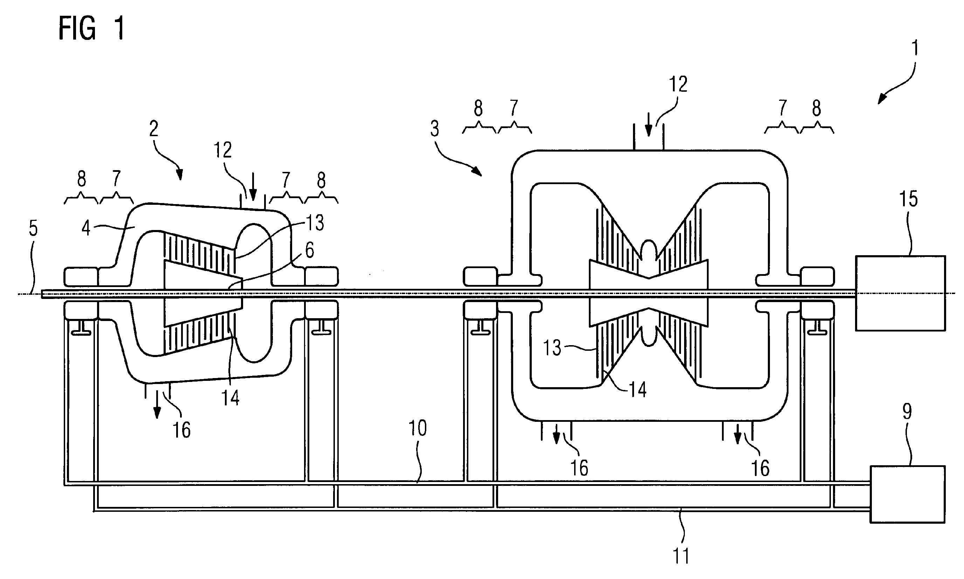

In Figur 1 ist eine Dampfturbinenanlage 1 dargestellt. Die Dampfturbinenanlage 1 umfasst eine erste Teilturbine 2 und eine zweite Teilturbine 3. Die erste Teilturbine 2 weist eine als Außengehäuse ausgebildete Turbinenkomponente 4 auf. Ein um eine Rotationsachse 5 drehbar gelagerter Rotor 6 ist in der ersten Teilturbine 2 und zweiten Teilturbine 3 angeordnet. Sowohl die erste Teilturbine 2 als auch die zweite Teilturbine 3 weisen eine Dichtungsanordnung 7 und eine Wellenlageranordnung 8 auf. Die Wellenlageranordnung 8 wird mit Wasser als Schmier- und Kühlmittel betrieben. Das Wasser wird über nicht näher dargestellte Pumpen und einer Wasserversorgung 9 über Leitungen 10 an die Wellelageranordnung 8 geführt. Über Rückleitungen 11 wird das Wasser der Wasserversorgung wieder zugeführt. Dadurch wird ein Wasserkreislauf geschlossen.

Im Betrieb strömt Dampf über eine Einlassöffnung 12 in die erste Teilturbine 2 oder zweite Teilturbine 3. Der Dampf durchströmt anschließend verschiedene Leitschaufeln 13 und Laufschaufeln 14. Der Rotor 6 wird hierbei in eine Drehbewegung versetzt. Diese Drehbewegung wird an einen Generator 15 übertragen. In dem Generator 15 wird anschließend elektrische Energie bereitgestellt. Der nach den letzten Leit- und Laufschaufelstufen ausströmende Dampf wird über eine Auslassöffnung 16 aus der ersten Teilturbine 2 oder zweiten Teilturbine 3 abgeführt.

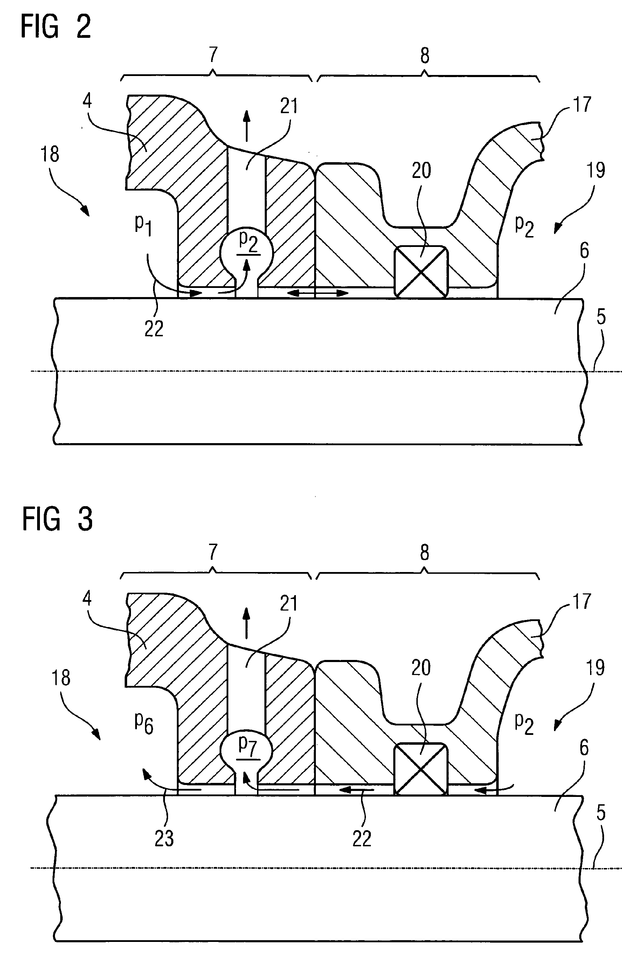

In der Figur 2 ist eine abgebrochene Darstellung einer Turbinenkomponente 4 und einer Wellenlagerkomponente 17 zu sehen. Das eigentliche Wellenlager ist nicht näher dargestellt und liegt außerhalb der Fig. 2. Der in einem Innenraum der ersten Teilturbine 2 herrschende durch das Arbeitsmedium hervorgerufene Druck p₁ ist größer als ein in einem Außenraum 19 herrschender Außendruck p₂. Die Wellenlageranordnung 8 umfasst eine Dichtung 20 zur Verhinderung des Austretens flüssiger Medien wie z. B. Wasser. Die Turbinenkomponente 4 wird mit der Wellenlagerkomponente 17 integriert. In einer alternativen Ausführungsform kann die Wellenlagerkomponente 17 gedichtet an die Turbinenkomponente 4 angeflanscht werden. Die Turbinenkomponente 4 ist hierbei in Längsrichtung gegeneinander dichtend direkt nacheinander and die Wellenlagerkomponente 17 angeordnet.

Eine Bohrung 21 ist derart ausgebildet, dass ein Druck p₂ ausgebildet wird, der identisch mit dem im Außenraum 19 herrschenden Außendruck p₂ ist. Der Außendruck 21 ist identisch mit dem Druck der Lagerflüssigkeit und daher identisch mit dem Wasserdruck im Lager. In der Bohrung 21 wird der Leckdampf auf Druckniveau des Lagers abgesaugt, damit das Arbeitsmedium nicht in das Lager eindringen kann. Eine Leckageströmung 22 breitet sich in Folge dessen lediglich bis zur Bohrung 21 aus, da in Leckageströmungsrichtung kein Druckgefälle mehr vorherrscht. Der Druck in der Bohrung 21 ist im Wesentlichen gleich groß wie der Außendruck P₂.

In Figur 3 ist ein Schnitt durch eine Dichtungsanordnung 7 und Wellenlageranordnung 8 dargestellt. In dieser Ausführungsform ist der Außendruck p₂ größer als der im Innenraum 18 herrschende Druck p₆. Die Bohrung 21 ist hierbei derart ausgebildet, dass der in der Bohrung 21 herrschende Druck p₇ größer ist als der im Innenraum herrschende Druck p₆. Da der im Außenraum 19 herrschende Druck p₂ größer ist als der in der Bohrung 21 herrschende Druck p₇ strömt ein Leckagestrom in Richtung des Innenraums 18. Ein Teil dieser Leckageströmung 22 wird in der Bohrung 21 abgeleitet. Da der Druck in der Bohrung 21 p₇ größer als der im Innenraum 18 herrschende Druck p₆ strömt ein geringerer Leckagestrom 23 schließlich in den Innenraum 18 der Teilturbine. Um den Leckagestrom 23 zu minimieren können konventionelle berührungslose Dichtungen zum Einsatz kommen, um den Spaltmassenstrom 22 gering zu halten.

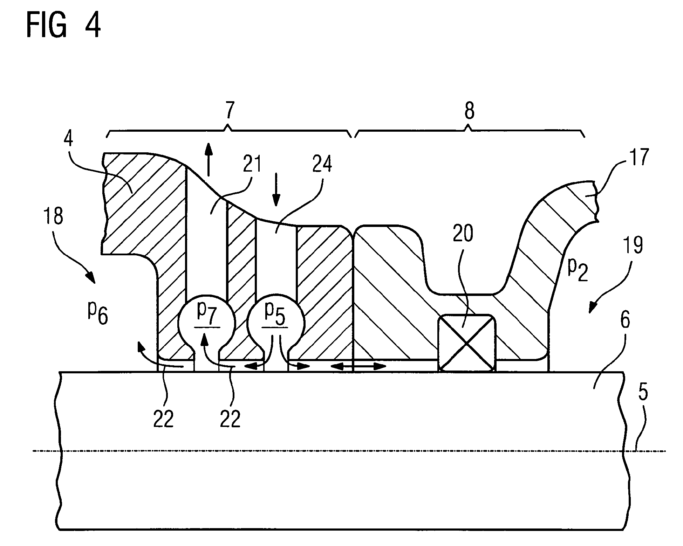

In der Figur 4 ist eine alternative Ausführungsform zu der in Figur 3 dargestellten Dichtungsanordnung 7 und Wellenlageranordnung 8. Der wesentliche Unterschied zu Figur 3 besteht darin, dass eine zweite Bohrung 24 in der Turbinenkomponente vorgesehen ist. Die zweite Bohrung 24 ist zum Vermindern eines zweiten Anzapfdruckes p₅ ausgebildet. Der zweite Anzapfdruckes p₅ ist hierbei im Wesentlichen gleich groß wie der Außendruck p2. In Folge dessen herrscht zwischen der zweiten Bohrung 24 und dem Außenraum 18 kein Druckgradient. In Folge dessen entsteht kein größerer Leckagestrom zwischen der zweiten Bohrung 24 und den Außenraum 19. Der zweite Anzapfdruck p₅ ist größer als der Anzapfdruck p₇. Dadurch entsteht ein Leckagestrom zwischen der zweiten Bohrung 24 zur ersten Bohrung 21. Dieser Leckagestrom wird über nicht dargestellte Leitungen abgeführt. Da der Anzapfdruck p₇ größer ist als der Druck im Innenraum 18 p₆ entsteht auch hier ein Leckagestrom, der in den Innenraum 18 der Teilturbine führt.

## Patentansprüche

1. Dampfturbine mit einem um eine Längsrichtung drehbar gelagerten Rotor (6) und zumindest einer um den Rotor (6) angeordneten Turbinenkomponente (4), die einen mit einem Innendruck (p₁) zu beaufschlagenden Innenraum (18) von einem mit einem Außendruck (p₂) zu beaufschlagenden Außenraum (15) abgrenzt, wobei im Betrieb der Dampfturbine der Innendruck (p₁) von dem Außendruck (p₂) abweicht, und die Dampfturbine mit zumindest einer mit Wasser betriebenen Wellenlagerkomponente (8) zum Lagern des Rotors (6) ausgebildet ist,
**dadurch gekennzeichnet, dass**
die Turbinenkomponente (4) und die Wellenlagerkomponente (8) in Längsrichtung (5) gegeneinander dichtend direkt nacheinander angeordnet sind.

2. Dampfturbine nach Anspruch 1,
**dadurch gekennzeichnet, dass**
die Wellenlagerkomponente (8) mit der Turbinenkomponente (4) integriert ist.

3. Dampfturbine nach Anspruch 1,
**dadurch gekennzeichnet, dass**
die Wellenlagerkomponente (8) gedichtet an die Turbinenkomponente (4) angeflanscht ist.

4. Dampfturbine nach einem der Ansprüche 1 bis 3,
**dadurch gekennzeichnet, dass**
in der Turbinenkomponente (4) zumindest eine Bohrung (21) zum Vermindern eines Anzapfdruckes vorgesehen ist.

5. Dampfturbine nach Anspruch 4,
**dadurch gekennzeichnet, dass**
die Bohrung (21) derart ausgebildet ist, dass im Betrieb der Dampfturbine bei einem Innendruck (p₁) größer als der Aussendruck (p₂) der Anzapfdruck im Wesentlichen gleich groß ist wie der Außendruck (p₂).

6. Dampfturbine nach Anspruch 4,
**dadurch gekennzeichnet, dass**
die Bohrung (21) derart ausgebildet ist, dass im Betrieb der Dampfturbine bei einem Innendruck (p₁) kleiner als der Aussendruck (p₂) der Anzapfdruck im Wesentlichen kleiner ist als der Außendruck (p₂).

7. Dampfturbine nach Anspruch 6,
**dadurch gekennzeichnet, dass**
in der Turbinenkomponente (4) eine zweite Bohrung (24) zum Vermindern eines zweiten Anzapfdruckes vorgesehen ist.

8. Dampfturbine nach Anspruch 7,
**dadurch gekennzeichnet, dass**
die zweite Bohrung (24) derart ausgebildet ist, dass im Betrieb der Dampfturbine der zweite Anzapfdruck im Wesentlichen gleich groß ist wie der Außendruck (p₂).
